**Europäisches Patentamt**

(19) **European Patent Office**

**Office européen des brevets**

(11) Veröffentlichungsnummer: **0 143 950**

**B1**

(12) **EUROPÄISCHE PATENTSCHRIFT**

(45) Veröffentlichungstag der Patentschrift:
18.03.87

(51) Int. Cl.⁴: **F 01 D 25/16,** F 16 C 27/04

(21) Anmeldenummer: **84112149.4**

(22) Anmeldetag: **10.10.84**

(54) **Lagereinrichtung bei einem Abgasturbolader mit Tandem-Wälzlagern.**

(30) Priorität: **30.11.83 CH 6401/83**

(43) Veröffentlichungstag der Anmeldung:
**12.06.85 Patentblatt 85/24**

(45) Bekanntmachung des Hinweises auf die Patenterteilung:
**18.03.87 Patentblatt 87/12**

(84) Benannte Vertragsstaaten:
**CH DE FR GB LI**

(56) Entgegenhaltungen:
**FR-A-2 519 101**
**GB-A-1 149 980**
**US-A-2 869 941**

**PATENTS ABSTRACTS OF JAPAN, Band 8, Nr. 210**
**(M-328) (1647) 26. September 1984**

(73) Patentinhaber: **BBC Aktiengesellschaft Brown,**
**Boveri & Cie., Haselstrasse, CH- 5401 Baden (CH)**

(72) Erfinder: **Hörler, Hansulrich, Lerchenberg 5, CH-**
**8046 Zürich (CH)**

EP 0 143 950 B1

## Beschreibung

Die Erfindung bezieht sich auf eine Lagereinrichtung an einem Abgasturbolader mit Tandem-Wälzlagern gemäss Oberbegriff des Patentanspruchs 1.

Bei Abgasturboladern wirken grosse Axialkräfte auf den Rotor. Bei grossen Abgasturboladern werden diese Axialkräfte durch zwei hintereinander angeordnete Wälzlager aufgenommen. Um die radialen Lagerkräfte auch bei grösseren Unwuchten zu beschränken, müssen die Wälzlager federnd und dämpfend im Gehäuse abgestützt werden. Das Problem besteht darin, dass die beiden Wälzlager einzeln und unabhängig voneinander abgestützt werden müssen, damit auch bei Schiefstellung der Turboladerwelle relativ zum Gehäuse, die Radialkraft einigermassen gleichmässig auf beide Wälzlager verteilt wird. Grund für diese Schiefstellung kann sowohl der Planschlag und die Exzentrizität der Gehäuseteile, als auch eine Ausbiegung der Welle sein. Die Aussenringe der Wälzlager verschieben sich dabei in Radialrichtung gegeneinander, was nicht behindert werden darf.

Darüber hinaus soll die axiale Einbaulänge der Lagereinrichtung bei einem Abgasturbolader aus konstruktiven Gründen möglichst gering gehalten werden.

Bei vielen Turbomaschinen, wie beispielsweise Flugzeugtriebwerken werden Lagereinrichtungen mit radialer Abstützung des Lagers mittels rotationssymmetrisch axialangeordneten Federstäben angewendet. Weisen diese Lagereinrichtungen Tandem-Wälzlager auf, so sitzt jeder Wälzlageraussenring in einem eigenen Lagerhaltering fest. Dieser ist mit Aufnahmen für die Federstäbe versehen, welche sich parallel zu der Turboladerachse erstrecken. Ihre den Lagern abgewandten Enden sind in mit dem Lagergehäuse starr verbundenen Teilen fixiert und ihre den Lagern zugewandten Enden sind in dem jeweiligen Lagerhaltering mit einem Pressitz eingeschoben. Derartige Lagereinrichtungen sind zwar funktionsfähig, doch ist die benötigte axiale Einbaulänge relativ gross, um eine genügende Biegelänge und damit genügend kleine Biegespannungen in den Federstäben zu gewährleisten.

Der Erfindung liegt deshalb die Aufgabe zu Grunde, eine Lagereinrichtung für Abgasturbolader mit Tandem-Wälzlagern zu schaffen, bei welcher für eine bestimmte axiale Einbaulänge die Biegelänge der Federstäbe möglichst gross ist.

Erfindungsgemäss wird diese Aufgabe mit den kennzeichnenden Merkmalen des Patentanspruchs 1 gelöst.

Die durch die Erfindung erreichten Vorteile sind im wesentlichen in einer günstigeren Ausnutzung der zur Anordnung einer Lagereinrichtung mit Tandem-Wälzlager verfügbaren axialen Einbaulänge zu sehen, bzw. darin, dass die effektive Biegelänge der Federstäbe bei einer bestimmten Einbaulänge relativ gross ist. Dadurch werden die Biegespannungen in den Federstäben bei gleichgebliebenen weiteren Einflussgrössen geringer.

In der Zeichnung ist ein Ausführungsbeispiel des Erfindungsgegenstandes vereinfacht dargestellt.

Es zeigen:

Fig. 1 teilweise eine Lagereinrichtung eines Abgasturbolders mit Tandem-Wälzlager im Längsschnitt;

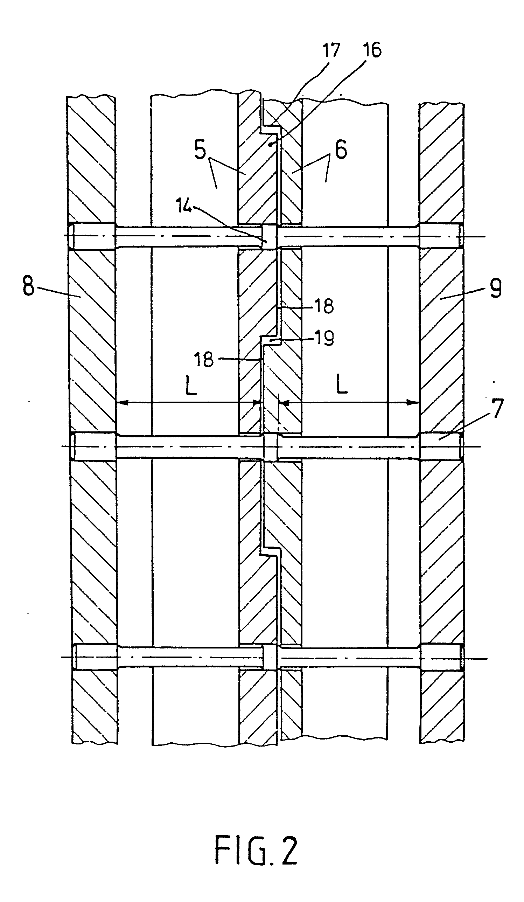

Fig. 2 einen abgewickelten Umfangsschnitt nach Linie X-X in Fig. 1.

Gleiche Teile sind in beiden Figuren mit denselben Bezugszeichen versehen.

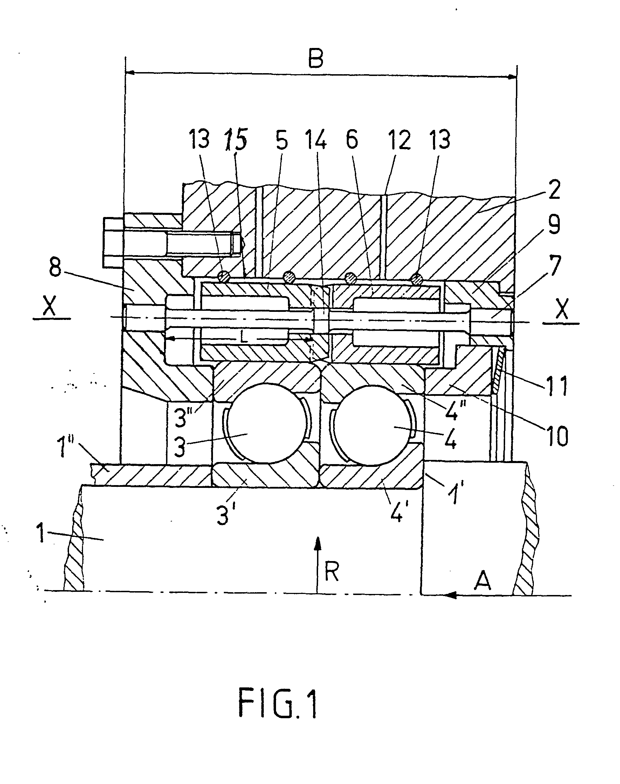

In Fig. 1 ist die obere Hälfte einer Lagereinrichtung gezeigt, bei welcher auf einer Turboladerwelle 1 Wälzlagerinnenringe 3' und 4' aufgeschoben und zwischen einem Anschlag 1' und einem Abstandhalter 1" eingespannt sind. Die Wälzlageraussenringe 3" und 4" sind zwischen einem Lagerflansch 8 und einem Dämpfungsring 10 in Axialrichtung festgehalten. Der Lagerflansch 8 ist am Turboladergehäuse 2 festgeschraubt. Auf den Aussenringen 3" und 4" der Wälzlager 3 und 4 sind Lagerhalteringe 5 und 6 spielfrei aufgeschoben. Die Lagerhalteringe 5, 6 sind von einer geraden Anzahl von rotationssymmetrisch angeordneten Federstäben 7 durchdrungen. Die Federstäbe 7 erstrecken sich parallel zur Turboladerachse. Ihre den Lagern abgewandten Enden sind einerseits im Lagerflansch 8, andererseits in einem Stützring 9 eingepresst. Dieser Stützring ist lediglich zur Erleichterung der Montage angeordnet. An seiner Stelle könnten die Federstäbe auch unmittelbar in Bohrungen des entsprechend angepassten Gehäuses eingepresst sein.

Zwischen den Lagerhalteringen 5, 6 und dem Turboladergehäuse 2 ist ein Radialspalt 15 vorhanden. Annähernd in der Mitte der Axiallänge jedes Lagerhalteringes 5, 6 ist im Turboladergehäuse 2 je ein Ölzuführungskanal 12 angeordnet. Seitlich von den Ölzuführungskanälen 12 sind in den im Turboladergehäuse 2 vorhandenen Ringnuten Öldichtungsringe 13 derart angeordnet, dass jeweils zwischen einem Lagerhaltering 5 (oder 6), dem Turboladergehäuse 2 und je zwei Öldichtungsringen 13 ein mit Öl ausgefüllter und mit dem Ölzuführungskanal 12 verbundener ringförmiger Raum entsteht. Diese Ölquetscheinrichtung stellt ein Dämpfungssystem dar, dessen Dämpfungscharakteristik unter anderem vom Strömungswiderstand in den Ölzuführungskanälen 12 abhängig ist.

Zusätzlich zu diesem ersten Dämpfungssystem ist eine zweite Reibungsdämpfungseinrichtung vorgesehen. Diese besteht aus dem Dämpfungsring 10 und einer Tellerfeder 11, wobei der Dämpfungsring 10 unter Vorspannung zwischen der aussenliegenden Stirnfläche des Wälzlageraussenringes 4" und der Tellerfeder 11 angeordnet ist. Mit dieser Tellerfeder wird eine Reibdämpfung der Radialschwingungen erreicht, da bei Radialbewegungen der Wälzlageraussenringe 3" und 4" relativ zum Gehäuse Reibarbeit geleistet werden muss, die die Dämpfungscharakteristik des federnden Systems weitgehend beeinflusst.

Während des Betriebes sind die in Tandemanordnung aufgesetzten Wälzlager 3 und 4 mit einer Axialkraft A und einer Radialkraft R belastet. Die beiden Kräfte A und R werden auf die Wälzlager 3 und 4 einigermassen gleichmässig verteilt und auf das Turboladergehäuse 2 übertragen. Dabei wird die Axialkraft A vom Lagerflansch 8 direkt aufgenommen, während die Radialkraft R über die Federstäbe 7 in die mit dem Turboladergehäuse 2 fest verbundenen Teile 8 und 9 geleitet wird.

Um die auf die Wälzlager wirkenden Radialkräfte nun aufnehmen zu können, müssen die, die Lagerhalteringe durchdringenden Federstäbe auf geeignete Art mit den Ringen schlüssig verbunden werden. Hierzu sind die Lagerhalteringe 5 und 6 an ihren einander zugewandten Stirnflächen mit Klauen 16 versehen, die berührungslos, d.h. mit Axialspiel 18 und Tangentialspiel 19 in jeweils gegenüberliegende Aussparungen 17 des andern Ringes eingreifen. Die Anzahl Klauen resp. Aussparungen entspricht dabei der Anzahl Federstäbe, welche im vorliegenden Fall gerade zu wählen ist, damit jedes Lager die gleiche Anzahl Stäbe zur Verfügung hat. Die Verteilung wird in der Art vorgenommen, dass jeder zweite in Umfangsrichtung angeordnete Federstab die Radialkräfte eines gleichen Lagers 3 oder 4 übernimmt.

Die Einspannstelle der Federstäbe wird so gewählt, dass die wirksame Biegelänge L nach jeder Seite hin gleich gross ist. Die Befestigung der Federstäbe geschieht über einen Bund 14, der in halber Stablänge angeordnet ist und mit einem Presssitz in einer entsprechenden Bohrung im klauenartigen Teil der Ringe sitzt. Der Bund 14 kann hierbei relativ schmal in seiner axialen Erstreckung gehalten werden, da an dieser Stelle keine Momente von den Federstäben zu übertragen sind. Auf Grund dieser Konfiguration versteht es sich, dass der Federstab den mit der Aussparung versehenen Ring jeweils berührungsfrei durchdringen muss. Da bei gleicher Biegelänge nach beiden Seiten hin sich alle Befestigungsstellen in einer gleichen Radialebene befinden, ist bei gegebener axialer Erstreckung des Bundes 14 auch die erforderliche Höhe der Klauen resp. Tiefe der Aussparungen gegeben.

Rechnungen haben ergeben, dass, verglichen mit der zum Stand der Technik zu zählenden Lösung, bei der jeder Lagerring mit eigenen Federstäben mit seiner Gehäuseseite verbunden ist, bei der neuen Lösung mit gleicher Anzahl Federstäbe auf Grund der grösseren Biegelänge L entweder die Biegespannung um 1/3 gesenkt wird oder dass bei gleicher Biegespannung die Gesamtbreite B des Lagereinbaus um 1/6 verringert werden kann.

Bei grösseren Unwuchten des Rotors wird der Radialanschlag durch das zwischen den Lagerhalterringen 5, 6 und dem Turboladergehäuse 2 vorhandene Radialspiel 15 begrenzt, damit die Federstäbe 7 nicht überlastet werden können. Bei einer Schiefstellung der Turboladerwelle 1 gegenüber dem Turboladergehäuse 2 wird die Radialbelastung der beiden Wälzlager 3 und 4 asymmetrisch, d.h. die zu übertragende Radialkraft eines Wälzlagers vergrössert sich um einen der lokalen Durchbiegung der Federstäbe 7 proportionalen Betrag.

**Patentansprüche**

1. Lagereinrichtung an einem Abgasturbolader mit Tandem-Wälzlagern, wobei jeder Wälzlageraussenring (3", 4") in einem eigenen Lagerhaltering (5, 6) festsitzt und die Lagerhalteringe (5, 6) von einer Mehrzahl von rotationssymmetrisch angeordneten Federstäben (7) durchdrungen sind, die sich parallel zur Turboladerachse erstrecken, wobei deren den Lagern abgewandte Enden in mit dem Lagergehäuse (2) starr verbundenen Teilen (8, 9) fixiert sind, dadurch.gekennzeichnet, dass die Lagerhalteringe (5, 6) an ihren einander zugewandten Stirnflächen Klauen (16) aufweisen, die in jeweils gegenüberliegende Aussparungen (17) mit Axialspiel (18) und Tangentialspiel (19) hineinragen, und dass die Federstäbe (7) über einen Bund (14) in den Klauen (16) eingespannt sind.

2. Lagereinrichtung nach Anspruch 1, dadurch gekennzeichnet, dass der Bund (14) zur Einspannung auf halber Länge der Federstäbe (7) angeordnet ist.

3. Lagereinrichtung nach Anspruch 1, dadurch gekennzeichnet, dass die Einspannung der Federstäbe mit einem Presssitz erfolgt.

4. Lagereinrichtung nach Anspruch 1, dadurch gekennzeichnet, dass in den Lagerhalteringen (5, 6) die Klauen (16) und die Aussparungen (17) in Umfangsrichtung aufeinanderfolgend angeordnet sind.

5. Lagereinrichtung nach Anspruch 1, dadurch gekennzeichnet, dass die Anzahl Federstäbe (7) gerade ist.

**Claims**

1. Bearing device on an exhaust gas turbocharger with tandem rolling contact bearings, in which device each rolling contact bearing outer race (3", 4") sits firmly in its own bearing retention ring (5, 6) and the bearing retention rings (5, 6) are penetrated by a multiplicity of rotationally symmetrically arranged spring rods (7) which extend parallel to the axis of the turbocharger, in which device the ends of the spring rods remote from the bearings are fixed in parts (8, 9) rigidly connected to the bearing housing (2), characterised in that the bearing retention rings (5, 6) have claws (16) on their end surfaces facing towards one another, which claws protrude into opposite recesses (17) with axial clearance (18) and tangential clearance (19), and that the spring rods (7) are gripped in the claws (16) by means of a collar (14).

2. Bearing device according to Claim 1, characterised in that the collar (14) to be gripped is located at mid-length of the spring rods (7).

3. Bearing device according to Claim 1, characterised in that the gripping of the spring rods takes place by means of a press fit.

4. Bearing device according to Claim 1, characterised in that the claws (16) and the recesses (17) in the bearing retention rings (5, 6) are located sequentially in the peripheral direction.

5. Bearing device according to Claim 1, characterised in that the number of spring rods (7) is even.

## Revendications

1. Dispositif de palier pour un turbocompresseur avec paliers à roulement en tandem, dans lequel chaque bague extérieure (3″, 4″) de palier à roulement est serrée dans sa propre bague de support (5, 6) et les bagues de support (5, 6) sont traversées par une pluralité de barres de flexion (7) disposées avec une symétrie de rotation, qui s'étendent parallèlement à l'axe du turbocompresseur, dans lequel leurs extrémités opposées aux paliers sont fixées dans des pièces (8, 9) rigidement assemblées au corps (2) du turbocompresseur, caractérisé en ce que, dans leurs faces terminales opposées l'une à l'autre, les bagues de support (5, 6) sont pourvues de crabots (16) qui s'engagent avec un jeu axial (18) et un jeu tangentiel (19) dans des creux (17) qui leur font face, et en ce que les barres de flexion (7) sont encastrées dans les crabots (16) au moyen d'un collet (14).

2. Dispositif de palier suivant la revendication 1, caractérisé en ce que le collet (14) d'encastrement est situé à mi-longueur des barres de flexion (7).

3. Dispositif de palier suivant la revendication 1, caractérisé en ce que l'encastrement des barres de flexion est assuré par un ajustage serré.

4. Dispositif de palier suivant la revendication 1, caractérisé en ce que les crabots (16) et les creux (17) sont disposés suivant une succession circonférentielle dans les bagues de support (5, 6).

5. Dispositif de palier suivant la revendication 1, caractérisé en ce que le nombre de barres de flexion (7) est pair.

FIG.1

FIG. 2